# EUROPEAN PATENT APPLICATION

(11) **EP 4 164 027 A1**
(43) Date of publication of application: **12.04.2023**
(21) Application number: 21880305.4
(22) Date of filing: 30.08.2021
(51) Int. Cl.: H01M 10/54, C22B 7/00, C01G 53/00, H01M 4/131, H01M 4/02

(54) **ACTIVE MATERIAL REUSE METHOD USING CATHODE SCRAPS**

(30) Priority: 16.10.2020 KR 20200134325
(71) Applicant: LG Energy Solution, Ltd., Seoul 07335 (KR)
(72) Inventor: KIM, Min-Seo, Daejeon 34122 (KR); PARK, Se-Ho, Daejeon 34122 (KR); YANG, Doo-Kyung, Daejeon 34122 (KR)
(74) Representative: Hoffmann Eitle
(86) International application number: PCT/KR2021/011629
(87) International publication number: WO 2022/080657

(57) **Abstract**

There is provided a method for collecting and reusing an active material from a positive electrode scrap. The method for reusing a positive electrode active material according to the present disclosure includes (a-1) dry-milling a positive electrode scrap comprising a lithium composite transition metal oxide positive electrode active material layer on a current collector to bring the active material layer into a powdered state and separate from the current collector, (a-2) thermally treating the active material layer in powder form in air for thermal decomposition of a binder and a conductive material in the active material layer, to collect an active material, (b) washing the collected active material with a lithium compound solution which is basic in an aqueous solution and drying, and (c) annealing the washed active material with an addition of a lithium precursor to obtain a reusable active material.

## Description

### TECHNICAL FIELD

The present disclosure relates to a method for reusing resources in the fabrication of a lithium secondary battery. More particularly, the present disclosure relates to a method for collecting and reusing a positive electrode scrap generated in the lithium secondary battery fabrication process or positive electrode active materials of lithium secondary batteries discarded after use. The present application claims the benefit of Korean Patent Application No. 10-2020-0134325 filed on October 16, 2020 with the Korean Intellectual Property Office, the disclosure of which is incorporated herein by reference in its entirety.

### BACKGROUND ART

Lithium secondary batteries that can be recharged repeatedly are gaining attention as an alternative to fossil energy. They have been primarily used in traditional handheld devices such as mobile phones, video cameras and electric power tools. Recently, the range of applications tends to gradually extend to vehicles which are powered by electricity (EVs, HEVs, PHEVs), large-capacity energy storage systems (ESSs) and uninterruptible power systems (UPSs).

A lithium secondary battery includes an electrode assembly including unit cells, each unit cell including a positive electrode plate and a negative electrode plate including a current collector and an active material coated on the current collector with a separator interposed between the positive electrode plate and the negative electrode plate, and a packaging or a battery case in which the electrode assembly is hermetically received together with an electrolyte solution. The lithium secondary battery primarily includes lithium-based oxide as the positive electrode active material and a carbon-based material as the negative electrode active material. The lithium-based oxide contains a metal such as cobalt, nickel or manganese. In particular, cobalt, nickel and manganese are very expensive invaluable metals. Among them, cobalt is a strategic metal, and its supply is the focus of attention all over the world. Due to the limited number of cobalt producing countries, the global supply of cobalt is unstable. When a supply and demand imbalance of strategic metal occurs, there is a very high possibility that the cost of the raw material will rise.

Studies have been made to collect and recycle invaluable metals from lithium secondary batteries (waste batteries) discarded after the expiration date. In addition to waste batteries, resources may be more preferably collected from waste materials discarded after punching the positive electrode plate or the positive electrode in which defects or failures occurred during the process.

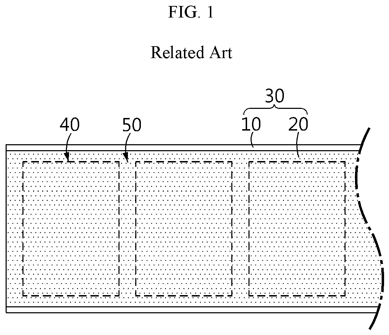

Currently, the lithium secondary battery is fabricated, as shown in FIG. 1, by coating a positive electrode slurry including a positive electrode active material, a conductive material, a binder and a solvent on a long sheet-type positive electrode current collector 10 such as an aluminum (Al) foil to form a positive electrode active material layer 20, manufacturing a positive electrode sheet 30, and punching a positive electrode plate 40 to a predetermined size. The leftover after punching is discarded as a positive electrode scrap 50. If the positive electrode active material is collected and reused from the positive electrode scrap 50, it will be very desirable in the industrial-economic and environmental aspects.

Most of the existing methods of collecting the positive electrode active material include dissolving the positive electrode with hydrochloric acid, sulfuric acid, nitric acid or the like, extracting the active material elements such as cobalt, nickel and manganese and using them as raw materials for the positive electrode active material synthesis. However, the active material element extraction using acids uses a non-eco-friendly process to collect pure raw materials, and needs a neutralization process and a waste water treatment process, resulting in the increased process cost. Additionally, it is impossible to collect lithium, one of the key positive electrode active material elements. To overcome these disadvantages, there is a need for a direct reuse method that does not dissolve the positive electrode active material and does not extract the active material in the form of an element.

### DISCLOSURE

### Technical Problem

The present disclosure is directed to providing a method for collecting and reusing an active material from a positive electrode scrap.

### Technical Solution

To solve the above-described problem, a method for reusing a positive electrode active material according to the present disclosure includes (a-1) dry-milling a positive electrode scrap comprising a lithium composite transition metal oxide positive electrode active material layer on a current collector to bring the active material layer into a powdered state and separate from the current collector, (a-2) thermally treating the active material layer in powder form in air for thermal decomposition of a binder and a conductive material in the active material layer, to collect an active material, (b) washing the collected active material with a lithium compound solution which is basic in an aqueous solution and drying, and (c) annealing the washed active material with an addition of a lithium precursor to obtain a reusable active material.

In the present disclosure, the method for reusing a positive electrode active material may further include (d) surface-coating the annealed active material.

The dry-milling may use any one of a pin mill, a disc mill, a cutting mill and a hammer mill.

Before the dry-milling, the method may further include shredding or cutting the positive electrode scrap.

The thermal treatment may be performed at 300 to 1000°C.

The thermal treatment may be performed at 550°C for 30 minutes at a temperature rise rate of 5°C/min.

The lithium compound solution contains a lithium precursor, preferably LiOH, in an amount of more than 0% and 15% or less. The washing may be performed within 1 hour.

The washing may be performed by stirring the collected active material at the same time with immersing in the lithium compound solution.

The lithium precursor may be at least one of LiOH, Li₂CO₃, LiNO₃ or Li₂O.

The lithium precursor may be added in an amount for adding lithium at a ratio of lost lithium to a ratio between lithium and other metal in a raw active material used in the active material layer.

For example, the lithium precursor may be added in an amount for adding lithium at a molar ratio of 0.001 to 0.4.

Further, the lithium precursor is preferably added in an amount for adding more lithium at a molar ratio of 0.0001 to 0.1 based on a 1 : 1 molar ratio of lithium : other metal.

The annealing may be performed in air at 400 to 1000°C. A temperature of the annealing step may exceed a melting point of the lithium precursor.

The active material in the active material layer may be collected in powder form, and carbon produced by carbonization of the binder or the conductive material may not remain on a surface.

The surface-coating step may include coating at least one of a metal, an organic metal or a carbon material on the surface by a solid or liquid phase process, and thermally treating at 100 to 1200°C.

The reusable active material may be represented by the following Formula 1:

[Formula 1] LiₐNiₓMn_{y}Co_{z}M_{w}O_{2+δ}

where M comprises at least one selected from the group consisting of B, W, Al, Ti and Mg, 1<a≤1.1, 0≤x<0.95, 0≤y<0.8, 0≤z<1.0, 0≤w≤0.1, -0.02≤δ≤0.02, x+y+z+w=1.

The reusable active material may have a fluorine (F) content of 100 ppm or less.

### Advantageous Effects

According to the present disclosure, it is possible to reuse waste positive electrode active materials such as positive electrode scrap generated in the lithium secondary battery fabrication process without using acids, thereby achieving eco-friendliness. The method according to the present disclosure does not need a neutralization process or a waste water treatment process, thereby achieving environmental mitigation and process cost reduction.

According to the present disclosure, it is possible to collect all the metal elements of the positive electrode active materials. It is possible to collect the current collector since it does not dissolve the current collector. This method does not use the extracted active material elements as raw materials for positive electrode active material synthesis, and instead directly uses the active materials collected in powder form, thereby achieving economical efficiency.

According to the present disclosure, toxic and explosive solvents such as NMP, DMC, acetone and methanol are not used, thereby achieving safety, and since simple processes such as thermal treatment, washing and annealing are used, it is easy to manage the process and suitable for mass production.

According to the present disclosure, it is possible to ensure excellent resistance characteristics and capacity characteristics without electrochemical performance degradation of the collected active materials.

In particular, according to the present disclosure, first, the active material is separated from the current collector using dry-milling. It is possible to achieve the positive electrode active material collection of 95% or more by perfectly separating the active material from the current collector by dry-milling. Since the dry-milling has high throughput per hour, it is possible to achieve the positive electrode active material reuse processing with high productivity.

### DESCRIPTION OF DRAWINGS

The accompanying drawings illustrate the embodiments of the present disclosure, and together with the following detailed description, serve to provide a further understanding of the technical aspects of the present disclosure, and thus the present disclosure should not be construed as being limited to the drawings.
FIG. 1 is a diagram showing a positive electrode scrap discarded after punching a positive electrode plate in a positive electrode sheet.
FIG. 2 is a flowchart of a method for reusing an active material according to the present disclosure.
FIG. 3 is a photographic image of the result for each step according to experimental example of the present disclosure.
FIG. 4 is a scanning electron microscopy (SEM) image of an active material layer after dry-milling in a method for reusing an active material according to the present disclosure.
FIG. 5 is an SEM image of the active material layer of FIG. 4 after thermal treatment in air.
FIG. 6 is an SEM image of an active material that has been washed to remove LiF and dried in a method for reusing an active material according to the present disclosure.
FIGS. 7 and 8 show the results of cell evaluation using active materials of example and comparative examples.

### BEST MODE

Hereinafter, the embodiments of the present disclosure will be described with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described herein and illustrations in the drawings are just an embodiment of the present disclosure, and do not fully describe the technical aspect of the present disclosure, so it should be understood that a variety of other equivalents and modifications could have been made thereto at the time of filing the patent application.

In the following description, a reference is made to the accompanying drawings that make up some of the present disclosure. The embodiments described in the detailed description, the drawings and the appended claims are not intended to be limiting. Other embodiments may be used without departing from the technical aspect and scope of the subject matter disclosed herein, and modifications and changes may be made thereto. As commonly described herein and illustrated in the drawings, the aspects of the present disclosure may include arrangement, substitution, combination, separation and design of a variety of different elements, and it will be immediately understood that all of them are clearly taken into account.

Unless otherwise defined, all terms (including technical and scientific terms) used herein have the same meaning as commonly understood by those having ordinary skill in the technical field pertaining to the present disclosure (hereinafter those skilled in the art).

The present disclosure is not limited to specific embodiments described herein. As obvious to those skilled in the art, many modifications and changes may be made thereto without departing from the technical aspects and scope of the present disclosure. In addition to those enumerated herein, functionally equivalent methods in the scope of the present disclosure will be obvious to those skilled in the art from the previous descriptions. Such modifications and changes fall in the scope of the appended claims. The present disclosure will be defined by the appended claims along with the full scope of equivalents to which the appended claims are entitled. It should be understood that the present disclosure is not limited to specific variant methods. It should be further understood that the terms used herein are for the purpose of describing the specific embodiments, but not intended to limit the present disclosure.

The conventional process for reusing an active material is mainly aimed at extracting the elements of invaluable metals (nickel, cobalt, manganese) in active materials of lithium secondary batteries of which the performance degraded after use and resynthesizing the active materials, and as opposed to the conventional process, the present disclosure is characterized as collecting an active material from a positive electrode scrap generated in the lithium secondary battery fabrication process.

In addition, the well-known process for reusing an active material involves producing metals (direct reduction method) or resynthesized active materials from invaluable metals extracted through acid/base dissolution or melting using reduction agents/additives, which requires an additional chemical method, making the process complex and causing additional economical expenses. However, the present disclosure relates to a method for reusing a positive electrode active material directly without dissolving the positive electrode active material.

To directly reuse the positive electrode active materials, it is necessary to remove the current collector from the positive electrode. The current collector may be removed from the positive electrode by removing the binder through high temperature thermal treatment, dissolving the binder using the solvent, dissolving the current collector, and screening the active materials through dry-milling and sieving.

In the dissolution of the binder using the solvent, the stability of the solvent is important. NMP is the most efficient solvent, but its disadvantage is toxicity and high cost. Another disadvantage is that a waste solvent re-treatment or solvent collection process is necessary. The dissolution of the current collector requires a lower process cost than using the solvent. However, it is difficult to remove impurities from the reusable active material surface, and hydrogen gas is produced in the current collector removal process, causing an explosion risk. Dry-milling and sieving cannot perfectly separate the current collector and the active material. The particle size distribution of the active materials changes in the milling process and it is difficult to remove the binder, resulting in characteristics degradation of batteries including the reusable active materials.

The present disclosure separates the active material from the current collector using dry-milling. It is possible to achieve the positive electrode active material collection of 95% or more by perfectly separating the active material from the current collector by dry-milling. Subsequently, the binder and the conductive material are removed through thermal treatment. Since thermal treatment is performed in air, the process only requires heating without any special device configuration and thus is relatively simple, and it is suitable for mass production and commercialization. However, impurities should not remain on the reusable active material surface. The present disclosure proposes removing impurities from the reusable active material surface.

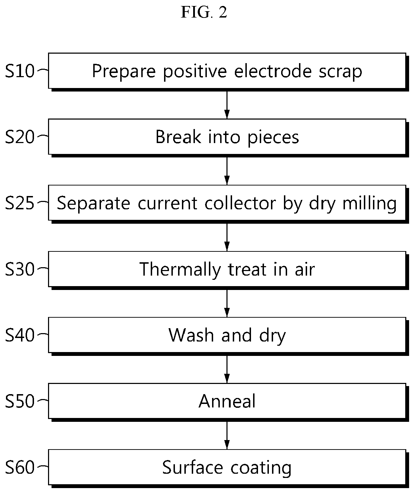

Hereinafter, the method for reusing an active material according to an embodiment of the present disclosure will be described with reference to FIG. 2. FIG. 2 is a flowchart of the method for reusing an active material according to the present disclosure.

Referring to FIG. 2, first, a waste positive electrode scrap is prepared (s10).

As described above with reference to FIG. 1, the positive electrode scrap may be leftover after manufacturing a positive electrode sheet including a positive electrode active material layer on a current collector and punching the positive electrode sheet. In addition, the positive electrode scrap may be prepared by collecting positive electrodes in which defects or failures occurred during the process. Additionally, the positive electrode scrap may be prepared by separating positive electrodes from lithium secondary batteries discarded after use.

For example, the positive electrode scrap may be the leftover after coating a slurry on a sheet type current collector of an aluminum foil, the slurry prepared by mixing a lithium cobalt oxide active material such as LiCoO₂(LCO) or NCM active material comprising nickel, cobalt and manganese, a carbon-based material, for example, carbon black as a conductive material and polyvinylidene fluoride (PVdF) as a binder in N-methyl pyrrolidone (NMP), then drying in a vacuum oven of about 120°C to manufacture a positive electrode sheet, and punching the positive electrode plate into a predetermined size.

The positive electrode active material of lithium secondary batteries includes lithium composite transition metal oxide, and in particular, lithium cobalt oxide such as LiCoO₂, lithium manganese oxide (LiMnO₂ or LiMn₂O₄), lithium iron phosphate compounds (LiFePO₄) or lithium nickel oxide (LiNiO₂). Additionally, to improve low thermal stability while maintaining excellent reversible capacity of LiNiO₂, nickel manganese-based lithium composite metal oxide with partial substitution of manganese (Mn) having excellent thermal stability for nickel (Ni) and NCM lithium composite transition metal oxide substituted with manganese (Mn) and cobalt (Co) are used. In particular, the present disclosure is suitable for the reuse of LCO or NCM active materials.

The positive electrode scrap has the active material layer on the current collector of the metal foil such as the aluminum foil. The active material layer is formed by coating the slurry including a mixture of the active material, the conductive material, the binder and the solvent, and after solvent volatilization, the active material and the conductive material are bonded by the binder. Accordingly, when the binder is removed, the active material may be separated from the current collector.

Subsequently, the positive electrode scrap is broken into pieces to a proper size (s20). Breaking into pieces refers to shredding of the positive electrode scrap to a proper size for handling. After shredding, the positive electrode scrap has the size of about 10 cm x 10 cm. In addition, cutting may be performed to cut to a smaller size. When cutting, the size of the positive electrode scrap is reduced to, for example, 1 cm x 1 cm.

The breaking into pieces including shredding and cutting may be performed considering the handling of the positive electrode scrap and the characteristics required in equipment used in the subsequent processes. For example, when equipment requiring continuous treatment in the loading and unloading of the positive electrode scrap is used, it is necessary to break too large positive electrode scrap into pieces to facilitate the movement of the positive electrode scrap.

Subsequently, the positive electrode scrap broken into pieces is dry-milled to bring the active material layer into a powdered state and separate it from the current collector (s25). The dry-milling may use any one of a pin mill, a disc mill, a cutting mill and a hammer mill, and preferably a pin mill. It is possible to achieve 95% or more collection of the positive electrode active material in powder form of 5 mm or less by the pin mill. The pin mill equipment has the throughput per hour of 500kg or more. Accordingly, in case that the process is performed for 10 hours per day, there is an electrode separation effect amounting to 5 tons.

The pin mill is a device having a structure in which rotor pins and stator pins are engaged with each other, and when a raw material is fed into the mill, the raw material is dispersed with a flow of air by rotation and milled using brittleness of the raw material by the impact of the rotor and the stator. The milled product is allowed to pass through openings in a screen formed in the shape of a ring, and only a portion of the milled product having passed through is taken.

Using the pin mill, it is possible to mill at a desired level and a desired particle size by adjusting the type and number of pins and the size range of the screen for sieving. When the positive electrode scrap broken into pieces is milled using the pin mill, the current collector piece is cut to a smaller size, and the highly brittle active material layer is separated from the current collector piece. The highly flexible current collector piece is rolled into a round shape and remains in the screen, and only the active material layer in fine powder form having passed through the screen may be separately obtained. The active material layer loses its continuity that makes it called as a layer and is broken into pieces, but still the active material, the binder and the conductive material gather together in powder form. The active material layer and the current collector may be separated by dry-milling through the differences in brittleness and flexibility of the active material layer and the current collector.

Subsequently, the active material layer in powder form is thermally treated in air (s30).

In the present disclosure, thermal treatment is performed for thermal decomposition of the binder and the conductive material in the active material layer. The thermal treatment may be performed at 300 to 1000°C, and may be referred to as high temperature thermal treatment. At temperatures of less than 300°C, it is difficult to remove the binder. When the positive electrode scrap is thermally treated in the presence of the current collector without dry-milling, it is necessary to perform thermal treatment below the melting point of the current collector, but the present disclosure performs thermal treatment on the active material layer from which the current collector has been already separated, and thus there is no limitation by the current collector on the thermal treatment temperature.

The thermal treatment time is long enough for thermal decomposition of the binder. For example, the thermal treatment time is about 30 minutes. Preferably, the thermal treatment time is 30 minutes or longer. As the thermal treatment time increases, the thermal decomposition of the binder is prolonged, but when the thermal treatment time is equal to or longer than a predetermined time, there is no difference in thermal decomposition effect. Preferably, the thermal treatment time is 30 minutes or longer and 5 hours or shorter.

The thermal treatment equipment may include various types of furnaces. For example, the thermal treatment equipment may be a box type furnace, and when considering productivity, may be a rotary kiln capable of continuous treatment.

The thermal treatment may be followed by fast or slow cooling in air.

For example, the thermal treatment may be performed at 550°C for 30 minutes at the temperature rise rate of 5°C/min. For example, the temperature rise rate is within the allowable range of the box type furnace and is enough to heat the powdery active material without thermal shock. 550°C is good for thermal decomposition of the binder. When the thermal treatment is performed at the above-described temperature for less than 10 minutes, thermal decomposition is insufficient, and thus it is necessary to perform the thermal treatment for 10 minutes or longer, and preferably for 30 minutes or longer.

The binder and the conductive material in the active material layer undergo the thermal decomposition through the thermal treatment in air into CO₂ and H₂O which are removed. Since the binder is removed, the active material to collect may be deagglomerated and screened in powder form.

It is important to perform the thermal treatment of s30 in air. When the thermal treatment is performed in a reducing or inert gas atmosphere, the binder and the conductive material suffer carbonization rather than thermal decomposition. When carbonized, carbon remains on the active material surface and degrades the performance of the reusable active material. When the thermal treatment is performed in air, carbon in the binder or the conductive material is removed by combustion reaction with oxygen to produce CO, CO₂ gas, and thus the binder and the conductive material do not remain and are almost removed.

Accordingly, according to the present disclosure, the active material is collected in powder form, and carbon produced by the carbonization of the binder or the conductive material may not remain on the surface.

Subsequently, the collected active material is washed and dried (s40). It is important to wash with a lithium compound solution which is basic in an aqueous solution. The lithium compound solution contains a lithium compound, preferably LiOH, in an amount of more than 0% and 15% or less. Preferably, the amount of LiOH is 15% or less. When LiOH is included in an excessive amount, excess LiOH may remain on the active material surface after washing, which may affect the subsequent annealing process. The addition of excess LiOH is not good for the process in order to make the active material surface before annealing as clean as possible, and the amount of LiOH is limited to 15% or less.

The washing may be performed by immersing the collected active material in the lithium compound solution. The washing may be performed within a week after immersion, preferably a day, and more preferably 1 hour. When washing is performed for a week or longer, the capacity may reduce due to excessive lithium dissolution. Accordingly, it is desirable to wash within 1 hour. The washing includes immersing the active material in the lithium compound solution which is basic in an aqueous solution, and stirring in the immersed state. It is desirable to perform immersion and stirring together. When the active material is immersed in the lithium compound solution without stirring, the washing process is slow, resulting in lithium dissolution. When stirring is performed together, the process time is minimized, and accordingly it is desirable to perform the stirring at the same time with the immersion in the lithium compound solution. The drying may be performed in air in a (convection type) oven after filtration.

The washing with the lithium compound solution which is basic in an aqueous solution may be performed for removal of LiF and metal fluoride present on the surface of the collected active material and surface modification. During the thermal treatment of s30, the binder and the conductive material in the active material layer are removed by evaporation of CO₂ and H₂O, and in this process, CO₂ and H₂O react with lithium on the active material surface to produce Li₂CO₃, LiOH, and F present in the binder such as PVdF reacts with lithium or any other metal in the positive electrode active material and lithium in the added lithium precursor to produce LiF or metal fluoride. When LiF or metal fluoride remains, the characteristics of batteries including the reusable active material degrade. The present disclosure adds the washing step of s40, to remove reactants generated on the reusable active material surface during the thermal treatment step (s30), in order to prevent impurities from remaining on the reusable active material surface.

In s40, it is important to wash with the lithium compound solution which is basic in an aqueous solution. When a sulfuric acid or hydrochloric acid aqueous solution is used instead of the lithium compound solution which is basic in an aqueous solution, F on the active material surface is washed out, but the performance of the reusable positive electrode active material may degrade due to dissolution of transition metal (Co, Mg) present in the active material. The lithium compound solution which is basic in an aqueous solution used in the present disclosure plays a role in removing trace amounts of binder that may be left after the thermal decomposition of s30, does not dissolve the transition metal present in the active material, and compensates for the amount of lithium that may be dissolved in the washing process.

LiF may act as a resistive layer when it remains. Through s40, the present disclosure may adjust the LiF content on the collected active material surface to less than 500 ppm, thereby improving the capacity. Preferably, the F content may be 100 ppm or less. More preferably, the F content may be 30 ppm or less.

Subsequently, the washed active material is annealed with an addition of a lithium precursor (s50).

Losses of lithium in the active material may occur through the previous steps s30 and s40. s50 compensates for the lithium loss.

Besides, in s50, the crystal structure of the active material is recovered through annealing, so the characteristics of the reusable active material are recovered or improved to the level of unused fresh active material.

The transformation structure may be found in the active material surface through the previous steps s30 and s40. For example, NCM-based lithium composite transition metal oxide as the active material may have a spinel structure due to transformation of Ni into rock-salt [NiCO₃·2Ni(OH)₂)H₂0] by moisture in s40. When batteries are manufactured in this state, the battery characteristics may degrade such as capacity reduction. The present disclosure recovers the crystal structure through s50. For example, NCM-based lithium composite transition metal oxide as the active material is recovered to a hexagonal structure. Accordingly, it is possible to recover or improve the initial characteristics to the similar level to fresh active material.

The lithium precursor in s50 may be at least one of LiOH, Li₂CO₃, LiNO₃ or Li₂O.

The lithium precursor is added in an amount for adding lithium at a ratio of lithium loss to a ratio between lithium and other metal in the raw active material (i.e., fresh active material) used in the active material layer. For example, when the ratio between lithium and other metal in the fresh active material is 1, the lithium precursor may be added in an amount for adding lithium at the molar ratio of 0.001 to 0.4. It is proper to add lithium at a molar ratio of 0.01 to 0.2. The addition of the lithium precursor exceeding the lithium lost through washing causes unreacted lithium precursors to be left on the reusable active material, resulting in the increased resistance in the process of reusing the active material, and accordingly it is necessary to feed the lithium precursor in an optimal amount.

Additionally, the lithium precursor is preferably added in an amount for adding more lithium at the molar ratio of 0.0001 to 0.1 based on a 1 : 1 molar ratio of lithium : other metal. The addition of excess lithium is for forming a surface protection layer on the active material by surface-coating, and it will be described in more detail below. When secondary batteries are manufactured using the active material, it is possible to suppress the side reactions by the electrolyte solution and maintain the life characteristics.

The annealing may be performed in air at 400 to 1000°C. The annealing temperature may be 600 to 900°C. The temperature is subject to change within the limited range depending on the type of the lithium precursor. The annealing time may be at least 1 hour. Preferably, the annealing time is about 5 hours. When the annealing time is long, the crystal structure may be sufficiently recovered, but the prolonged annealing does not greatly affect the performance. The annealing time is, for example, about 15 hours or less. The annealing equipment may be similar or identical to that of the thermal treatment step s30.

For example, when Li₂CO₃ is used as the lithium precursor, the annealing temperature is preferably 700 to 900°C, and more preferably, 710 to 780°C. It is because the melting point of Li₂CO₃ is 723°C. Most preferably, the annealing is performed at 750°C. When LiOH is used as the lithium precursor, the annealing temperature is preferably 400 to 600°C, and more preferably, 450 to 480°C. It is because the melting point of LiOH is 462°C.

Preferably, the annealing temperature is higher than the melting point of the lithium precursor. However, at temperatures higher than 1000°C, the thermal decomposition of the positive electrode active material occurs and degrades the performance of the active material, and accordingly the annealing temperature does not exceed 1000°C.

The reusable active material may be obtained through s50.

The present disclosure is characterized in separating the active material in powder form from the current collector in the positive electrode scrap through dry-milling in s25. Due to the mechanical separation, there is no change in chemical properties of the current collector or the active material.

The positive electrode active material layer may be separated by thermal treatment in the presence of the current collector without dry-milling. However, when the current collector is separated by thermal treatment alone without dry-milling, the volume of the current collector and the electrode is large and a mixing process by oxygen contact is important, so the throughput per unit volume is lower than that of the proposed dry-milling. The active material powder separated from the current collector by the proposed dry-milling method may be processed in a large amount by the thermal treatment process. The use of the pin mill equipment achieves the positive electrode active material collection of 95% or more and the electrode separation throughput per hour of at least 500 kg, and allows a continuous process, thereby maximizing the productivity.

Additionally, in the case of thermal treatment of the positive electrode scrap containing the current collector without dry-milling, there is a constraint that thermal treatment be performed at the temperature of 550°C or less due to the oxidation problem of the aluminum current collector. However, according to the present disclosure, since the current collector is separated before thermal treatment, the thermal treatment temperature may exceed 550°C which is higher than the melting point of the current collector. That is, by separating the current collector first, there is no limitation on the thermal treatment temperature in the thermal treatment for removing the binder and the conductive material, and high temperature heating is possible.

Optionally, s60 may be performed. In s60, surface-coating is performed on the active material annealed in s50.

The surface-coating step may include coating at least one of a metal, an organic metal or a carbon material on the surface by a solid or liquid phase process and thermally treating at 100 to 1200°C. When thermal treatment is performed at higher temperatures than 1200°C, performance degradation may occur due to the thermal decomposition of the positive electrode active material. In the surface-coating, coating on the surface by a solid or liquid phase process may use mixing, milling, spray drying and grinding.

In the case of the NCM active material, it may be coated with B, B-W, W, and in the case of the LCO active material, it may be coated with Al, Mg, Ti. In case that high thermal treatment temperature is necessary for coating, s60 may be performed before s50. That is, surface-coating is followed by annealing with an addition of the lithium precursor.

Through the surface-coating, a surface protection layer of different metals is formed. In case that the molar ratio of lithium : other metal in the positive electrode active material is 1 : 1, when the molar ratio of lithium : other metal in the positive electrode active material reduces to less than 1 : 1 by the reaction of lithium in the active material with the surface coating material, it fails to exhibit the capacity 100%. Accordingly, lithium is added through the addition of the lithium precursor in the previous step s30 so that the molar ratio of lithium : other metal in the positive electrode active material is 1 : 1, and besides, more lithium in an excessive amount is added at a molar ratio of 0.0001 to 0.1 to other metal in the positive electrode active material. Accordingly, it is possible to form the surface protection layer such that the molar ratio of lithium : other metal in the positive electrode active material is 1 : 1 in the surface-coating.

In detail, when the active material is coated with metal oxide such as B, W, B-W and thermally treated, a lithium boron oxide layer may be formed on the active material surface, and this serves as the surface protection layer. The lithium additionally included at the molar ratio of 0.0001 to 0.1 in s50 reacts with the metal oxide such as B, W, B-W in s60, and the molar ratio of lithium : other metal in the positive electrode active material does not reduce to less than 1 : 1, so there is no capacity reduction.

The reusable active material obtained by the above-described method may be represented by Formula 1.

[Formula 1] LiₐNiₓMn_{y}Co_{z}M_{w}O_{2+δ}

where M comprises at least one selected from the group consisting of B, W, Al, Ti and Mg, 1<a≤1.1, 0≤x<0.95, 0≤y<0.8, 0≤z<1.0, 0≤w≤0.1, -0.02≤δ≤0.02, x+y+z+w=1.

The reusable active material may have the F content of 100 ppm or less. According to the present disclosure, the active material having the reduced F content may be collected, and when reused as active materials, may provide excellent resistance characteristics and capacity characteristics.

According to the present disclosure, LiF or metal fluoride is removed in the washing step of s40. The step of washing using the lithium compound solution which is basic in an aqueous solution and drying is safe and low-priced, and may remove LiF or metal fluoride without losses of other elements and prevent the dissolution of transition metal, and thus compensate for the lithium loss occurring during the process. The annealing step is also safe and low-priced and may recover the crystal structure, i.e., improve the crystallinity, thereby enhancing the battery characteristics of the reusable active material.

The reusable active material obtained according to the present disclosure may have a similar particle size distribution to fresh active material, thereby eliminating the need for any treatment to control the particle size distribution. Since carbon produced by carbonization of the binder or the conductive material does not remain on the surface, there is no need for a carbon removal step. Accordingly, the active material obtained through the method of FIG. 2 may be used to manufacture the positive electrode without any treatment.

The reusable active material may be used 100% without composition adjustment or mixed with fresh active material, and may be used to prepare a slurry in combination with a conductive material, a binder and a solvent.

Hereinafter, the experimental example of the present disclosure will be described in detail.

### <Experimental example 1>

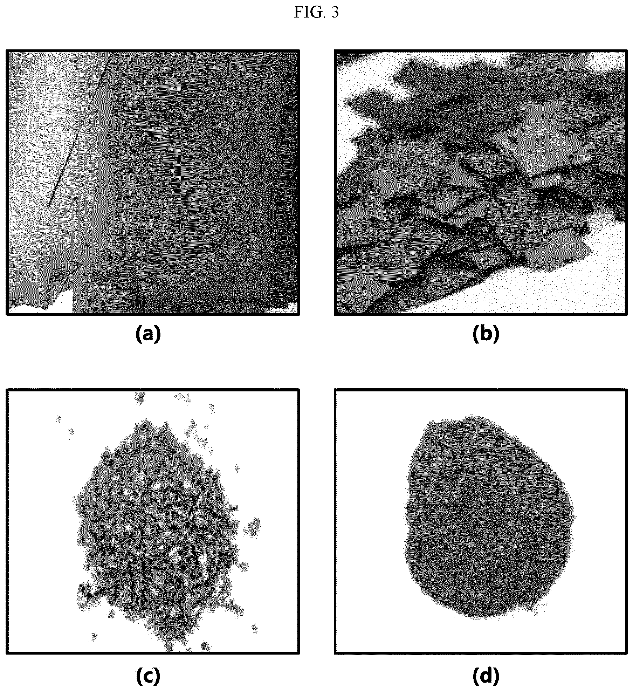

FIG. 3 is a photographic image of the result for each step according to the experimental example of the present disclosure.
(a) of FIG. 3 is a photographic image of shredded positive electrode scrap. The discarded positive electrode scrap is collected and shredded into the size of about 10 cm x 10 cm.
(b) of FIG. 3 is a photographic image of cut positive electrode scrap. The shredded positive electrode scrap is cut into the size of 1 cm x 1 cm.
(c) of FIG. 3 is a photographic image of the current collector piece after pin milling of the cut positive electrode scrap, and (d) of FIG. 3 is a photographic image of the active material layer in powder form separated from the current collector piece after pin milling. It is found that the active material layer is almost perfectly separated from the current collector by dry-milling using the pin mill.

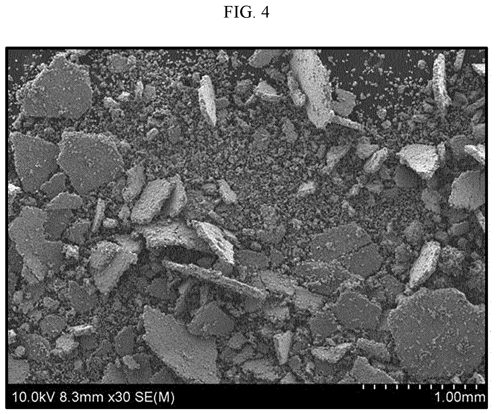

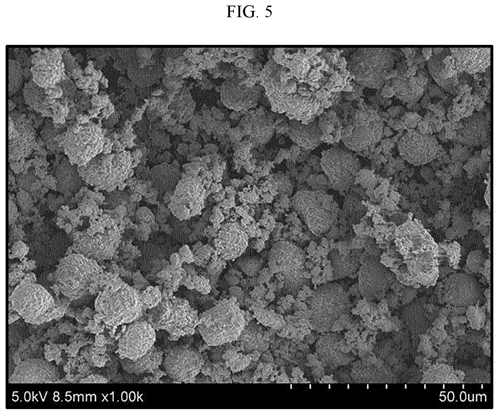

FIG. 4 is a scanning electron microscopy (SEM) image of the active material layer shown in (d) of FIG. 3, and FIG. 5 is an SEM image after thermal treatment of the active material layer of FIG. 4 in air. The SEM imaging is performed using SEM equipment commonly used in the lab. For example, imaging may be performed using HITACHI s-4200. However, there is no difference depending on the measurement device or method.

FIG. 4 shows particle agglomeration in the active material layer due to the presence of the binder in the active material layer before thermal treatment, FIG. 5 shows particle deagglemration by removing the binder by thermal treatment. Accordingly, the binder and the conductive material are removed by the proposed thermal treatment in air, and thus the binder or the conductive material hardly remains on the active material surface.

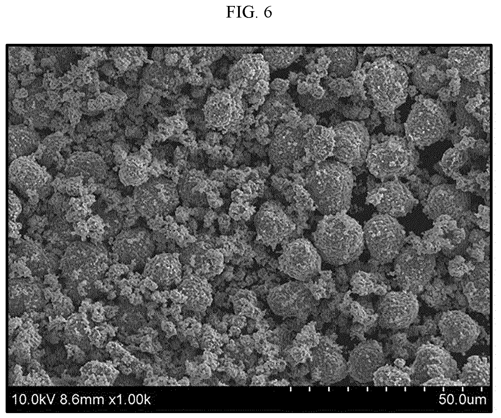

FIG. 6 is an SEM image of the active material that has been washed to remove LiF and dried in the method for reusing an active material according to the present disclosure. When the active material is annealed with an addition of a lithium precursor, a reusable active material almost in the same shape as fresh active material may be obtained.

### <Experimental example 2>

A positive electrode scrap using NCM lithium composite transition metal oxide positive electrode active material and a positive electrode scrap using LCO active material are prepared. The active material in powder form is separated by performing the dry-milling step in the method for reusing an active material according to the present disclosure, and thermal treatment is performed in air at 550°C for 30 minutes. Subsequently, some are immersed in LiOH aqueous solution for 10 minutes to wash in the method for reusing an active material according to the present disclosure, and others are not washed. To determine the Li/metal mole ratio in the active material and the amount of residual LiF, residual F content analysis is performed, and the results are summarized in Table 1.

Sample 1 is LCO fresh active material. Sample 2 is LCO positive electrode scrap which is thermally treated, but not washed. Sample 3 is LCO positive electrode scrap which is thermally treated and washed.

Sample 4 is NCM fresh active material. Sample 5 is NCM positive electrode scrap which is thermally treated, but not washed. Sample 6 is NCM positive electrode scrap which is thermally treated and washed.

**[Table 1]**

| | Type | Thermal treatment | Washing | Li/metal mole ratio | F content (mg/kg) |
|---|---|---|---|---|---|
| Sample 1 | LCO fresh active material | None | None | 0.98 | ND |
| Sample 2 | Using LCO positive electrode scrap | Thermally treated | Unwashed | 0.96 | 1900 |
| Sample 3 | Using LCO positive electrode scrap | Thermally treated | Washed | 0.93 | ND |
| Sample 4 | NCM fresh active material | None | None | 0.99 | ND |
| Sample 5 | Using NCM positive electrode scrap | Thermally treated | Unwashed | 0.95 | 1450 |
| Sample 6 | Using NCM positive electrode scrap | Thermally treated | Washed | 0.91 | ND |

ND indicates 30 ppm or less as measured. Since samples 1 and 4 are fresh active materials, F is hardly detected.

In samples 2 and 5 without washing, the amount of residual F is measured as 1900 mg/kg and 1450 mg/kg. However, it can be seen that in samples 3 and 6 with washing, LiF is completely dissolved in a washing solution and thus removed so thoroughly that it cannot be detected. Accordingly, both the LCO and NCM positive electrode scrap produces LiF when thermally treated, but LiF is completely removed by the proposed washing step.

Meanwhile, it is found that the Li/metal mole ratio in samples 2 and 5 is reduced by about 0.2~0.5 compared to the fresh active material of samples 1 and 4, and the Li/metal mole ratio in samples 3 and 6 is reduced by about 0.2~0.5 compared to samples 2 and 5. In particular, it seems that the NCM active material has a significant reduction in Li/metal mole ratio due to a larger specific surface area of particles than LCO and transformation to the spinel structure. That is, it can be seen that lithium loss occurs in the thermal treatment step for removing the binder and the conductive material, and lithium loss also occurs in the surface modification step through washing. Accordingly, the method for reusing an active material according to the present disclosure proposes comprising annealing with an addition of a lithium precursor to compensate for the lithium loss.

### <Experimental example 3>

A positive electrode scrap containing NCM lithium composite transition metal oxide : carbon black conductive material: PVdF binder = 96.25 : 1.5 : 2.25 is prepared.

Comparative example 1 is fresh active material.

Comparative examples 2 and 3 are positive electrode scrap thermally treated in air in the presence of the positive electrode active material layer on the current collector without dry-milling of the positive electrode scrap. The thermal treatment is performed at 550°C for 30 minutes. The current collector is separated by the thermal treatment and the active material is collected in powder form. In comparative example 2, the collected active material is not washed. In comparative example 3, washing is performed.

Comparative example 4 and example 1 are positive electrode scrap in which the active material layer is separated from the current collector by dry-milling using a pin mill, and only the active material layer in powder form separated from the current collector is thermally treated in air. The thermal treatment is performed at 550°C for 30 minutes in the same way as comparative examples 2 and 3. In comparative example 4, the collected active material is not washed. In example 1, washing is performed in the same way as comparative example 3.

To determine the Li/metal mole ratio in the active material and the amount of residual LiF, residual F content analysis is performed, and the results are summarized in Table 2.

**[Table 2]**

| | Dry milling | Thermal treatment | Washing | Li/metal mole ratio | F content (mg/kg) |
|---|---|---|---|---|---|
| Comparative example 1 | None | None | None | 1.03 | ND |
| Comparative example 2 | Without dry milling | Thermally treated | Unwashed | 1.01 | 1620 |
| Comparative example 3 | Without dry milling | Thermally treated | Washed | 0.94 | 85 |
| Comparative example 4 | With dry milling | Thermally treated | Unwashed | 1.02 | 1470 |
| Example 1 | With dry milling | Thermally treated | Washed | 0.93 | 70 |

The experimental result reveals that there is a slight difference in the amount of F remaining after thermal treatment, but there is no big difference in the amount of F remaining after washing. Additionally, the Li/metal mole ratio measurement results of comparative example 3 and example 1 are within the similar level (error range ±0.02), so it can be seen that even though the initial electrode separation process is different, the analysis value after washing is at the similar level.

### <Experimental example 4>

Each positive electrode active material is prepared by the method of example and comparative example as described below, and electrochemical performance evaluation is performed. 96.25 wt% of each collected or prepared positive electrode active material in example and comparative example, 1.5 wt% of carbon black as a conductive material and 2.25 wt% of PVdF as a binder are metered and mixed in NMP to prepare a slurry, which is used to manufacture a positive electrode, and a Coin Half Cell (CHC) is manufactured and evaluated for electrochemical performance. Voltage is 3 to 4.3V, and initial formation charge/discharge is performed at 0.1C/0.1C. An electrolyte solution for the cell is a carbonate based electrolyte solution, including Ethylene carbonate (EC):Ethyl methyl carbonate (EMC)=3:7 with an addition of additives. The discharge condition uses 0.5C/1C and 0.5C/2C.

Comparative example 5 undergoes annealing at 750°C 5 hours by the introduction of 0.1 mole of lithium precursor (Li₂CO₃) into comparative example 3 of experimental example 3, followed by surface coating thermal treatment at 300°C for 5 hours with an addition of H₃BO₃ such that the boron content is 500 ppm as a surface protective layer.

Example 2 undergoes annealing and surface-coating on example 1 of experimental example 3 in the same method as comparative example 5.

Table 3 summaries the experimental results.

**[Table 3]**

| | Type | Comparative example 1 | Comparative example 5 | Example 2 |
|---|---|---|---|---|
| 0.1C/0.1C formation | Charge | 197.38 | 197.99 | 197.3 |
| | Discharge | 178.2 | 180.59 | 181.03 |
| | Efficiency | 90.28 | 91.21 | 91.76 |
| 0.5C/1C | Discharge | 163.27 | 165.48 | 165.72 |
| 0.5C/2C | Discharge | 157.37 | 160.12 | 160.22 |

The electrical performance evaluation result reveals that comparative example 5 and example 2 show the equivalent level at the initial capacity (0.1C/0.1C), and also show the equivalent level at high C rate. That is, the same cell performance result may be obtained by performing the same washing, annealing with an addition of a lithium precursor and surface-coating process even though the initial current collector separation process is different.

### <Experimental example 5>

Each positive electrode active material is prepared by the method of examples and comparative examples as described below, and electrochemical performance evaluation is performed.

Example 3: Reusable active material is collected by the method for reusing an active material according to the present disclosure as described above. A positive electrode scrap discarded after punching the positive electrode plate having NCM-based lithium composite transition metal oxide as the active material is prepared, and s20 and s25 are performed to obtain an active material layer in powder form. The thermal treatment of s30 is performed in air at 550°C for 30 minutes. The washing of s40 is performed for 10 minutes using LiOH. In s50, annealing is performed at 750°C for 15 hours by the introduction of a lithium precursor (Li₂CO₃) in an amount for adding more lithium at the molar ratio of 0.09 during the process based on the molar ratio (Inductively Coupled Plasma (ICP) analysis) of lithium and other metal in the raw active material. Theoretically, in the case of fresh active material, the molar ratio of lithium : other metal is 1 : 1, but since an average error of ICP equipment for measuring the molar ratio is ±0.05, and preferably about ±0.02, the molar ratio of lithium : other metal in the raw active material may be 1 ± 0.05 : 1 through ICP measurement. In this experiment, the lithium precursor is added based on the analysis ratio through ICP analysis.

Example 4: In addition to example 3, the active material surface protection layer recovery process of s60 is performed.

Comparative example 6: Fresh NCM-based lithium composite transition metal oxide, not reusable active material, is used.

Comparative example 7: Only thermal treatment of s30 in the method for reusing an active material according to the present disclosure as described above is performed to remove the binder and the conductive material. Since s25 in the method for reusing an active material according to the present disclosure is not performed, the Al current collector is separated during s30. s30 is performed in the same condition as example 3. The surface modification of s40, the crystal structure recovery of s50 and the surface-coating process of s60 in the method for reusing an active material according to the present disclosure are not performed.

Comparative example 8: Further to comparative example 7, active material is collected by the surface modification of s40 in the method for reusing an active material according to the present disclosure. That is, surface modification is performed, but the crystal structure recovery of s50 and the surface coating process of s60 in the method for reusing an active material according to the present disclosure are not performed. s40 is performed in the same condition as example 3.

Comparative example 9: Further to comparative example 7, NCM-based lithium composite transition metal oxide active material is collected by the crystal structure recovery of s50 without the surface modification of s40 in the above-described method for reusing an active material according to the present disclosure. As opposed to example 3, annealing for crystal structure recovery is performed without an addition of a lithium precursor.

Comparative example 10: s30, s40 and s50 are performed in the same way as example 3. s25 is not performed. As opposed to example 3, annealing for crystal structure recovery is performed without an addition of a lithium precursor.

ICP analysis is performed on each positive electrode active material collected or prepared in examples and comparative examples to analyze an amount of residual LiF, a ratio of lithium and other metal in the active material, and an amount of a specific element such as B or W.

Additionally, 96.25 wt% of each positive electrode active material collected or prepared in examples and comparative examples, 1.5 wt% of carbon black as a conductive material and 2.25 wt% of PVdF as a binder are metered and mixed in NMP to prepare a slurry, which is used to a positive electrode, and a Coin Half Cell (CHC) is manufactured and evaluated for electrochemical performance.

To determine an amount of LiF remaining in the collected active material in comparative examples 7 and 8, F detection and analysis is performed by ICP. The result is shown in the following Table 4.

**[Table 4]**

| | Comparative example 7 | Comparative example 8 |
|---|---|---|
| F content (mg/kg) | 1450 | ND |

Referring to Table 4, a significant reduction in the F content in the collected positive electrode active material is found in comparative example 8 compared to comparative example 7. That is, it can be seen that LiF is completely dissolved in the lithium compound solution by washing, and thus removed so thoroughly that it cannot be detected by ICP. Accordingly, it can be seen that LiF removal is performed remarkably well by s40.

To identify if there is a change of lithium in the positive electrode active material during s30 and s40 of the present disclosure, a ratio of lithium/other metal in the active material is analyzed by ICP. The result is shown in the following Table 5.

**[Table 5]**

| | Comparative example 6 | Comparative example 7 | Comparative example 8 |
|---|---|---|---|
| Ratio of lithium and other metal in active material | 0.99 | 0.95 | 0.91 |

Referring to Table 5, it can be seen that comparative example 7 has a reduction in the ratio of lithium/other metal by approximately 0.2 to 0.5 through thermal treatment of s30 compared to comparative example 6, and comparative example 8 has a reduction in the ratio of lithium/other metal by approximately 0.2 to 0.5 through washing and drying of S40 compared to comparative example 7. It seems that NCM-based lithium composite transition metal oxide has a significant reduction in the ratio of lithium to other metal due to a relatively large specific surface area of particles and transformation to the spinel structure. Accordingly, it can be seen that it is necessary to compensate for the deficient lithium.

Table 5 shows the values measured by ICP analysis, and ICP analysis has an error value of about ±0.02 as mentioned above. Accordingly, in comparative example 6 of fresh active material, the ratio of lithium and other metal may be smaller than 1. Accordingly, an amount of lithium precursor added to compensate for lithium loss is a reduced amount of lithium based on the ratio (the molar ratio analyzed by ICP) of lithium and other metal in the raw active material (i.e., fresh active material) used in the active material layer.

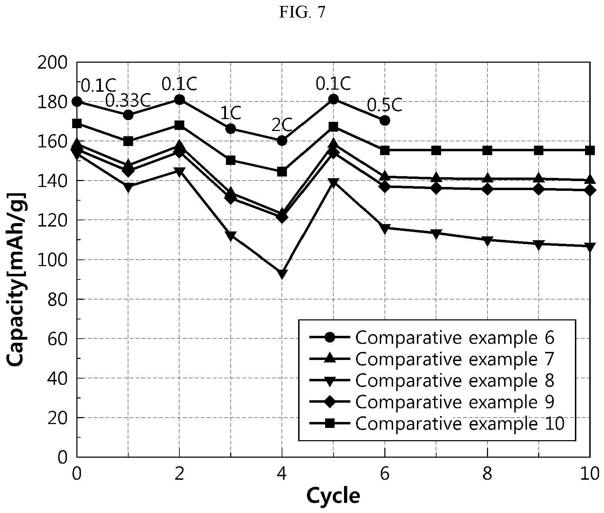

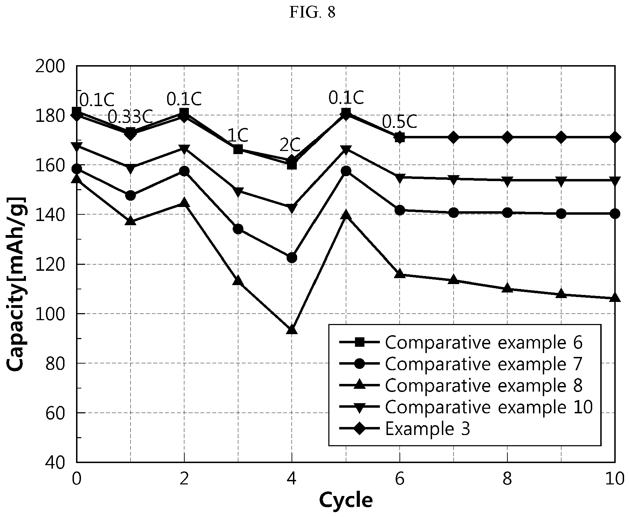

FIGS. 7 and 8 show the results of cell evaluation using the active materials of example and comparative examples. At different currents, capacity as a function of cycle number is evaluated to determine the rate performance. The equipment used for evaluation is a charge/discharge tester commonly used in the lab. There is no difference depending on the measuring device or method. In the graphs of FIGS. 7 and 8, the horizontal axis indicates the number of cycles and the vertical axis indicates capacity.

Voltage is 3 to 4.3V, and initial formation charge/discharge is performed at 0.1C/0.1C. An electrolyte solution for the cell is a carbonate based electrolyte solution, including EC:EMC=3:7 with an addition of additives.

First, referring to FIG. 7, in the case of comparative example 7 before surface modification and comparative example 8 after surface modification following primary thermal treatment (550°C/30 min) for removal of the binder and the conductive material, comparative example 8 having gone through surface modification shows a rapid reduction in electrode capacity. This is because Ni in NCM-based lithium composite transition metal oxide transforms into rock-salt by moisture as mentioned above, resulting in capacity reduction.

However, when annealing (750°C/15 hr) is performed without surface modification, this corresponds to comparative example 9, and when compared with comparative example 7, there is little capacity improvement effect. This is due to LiF remaining on the active material surface when surface modification is not performed. As shown above in Table 4, LiF is removed at a satisfactory level by washing.

When surface modification and annealing are performed after primary thermal treatment, the capacity increases as shown in comparative example 10. The reason is that although the capacity reduces after surface modification as shown in comparative example 8, Ni rock-salt is reduced through annealing after removal of LiF by surface modification and its structure is recovered to a hexagonal shape.

Subsequently, referring to FIG. 8, it is found that example 3 has the improved capacity, compared to comparative example 10. Compared to comparative example 10, example 3 adds a lithium precursor during annealing. It can be seen that the capacity is improved by compensating for lithium lost in the previous steps by the addition of the lithium precursor. The lithium loss occurring during thermal treatment and washing is described with reference to Table 5.

The lithium compound is added at a ratio of lithium loss to the existing lithium content in the positive electrode active material based on the ICP analysis results (Table 5), and as a result, the addition at the molar ratio of 0.09 to 0.1 shows the capacity improvement effect at the equivalent level to comparative example 6 as can be seen from the additional experiment.

According to the present disclosure, it is possible to collect the active material from the positive electrode scrap at the directly usable level. It is safe since toxic and explosive solvents such as NMP, DMC, acetone and methanol are not used, and since simple and safe processes such as thermal treatment, washing and drying, and annealing are used, it is suitable for mass production.

According to the present disclosure, it is possible to reuse positive electrode scrap using a simple, eco-friendly and economical method, and a lithium secondary battery manufactured reusing the prepared NCM-based lithium composite transition metal oxide positive electrode active material does not have a problem with the battery performance.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the scope of the appended claims and their equivalents.

## Claims

1. A method for reusing a positive electrode active material, comprising:
(a-1) dry-milling a positive electrode scrap comprising a lithium composite transition metal oxide positive electrode active material layer on a current collector to bring the active material layer into a powdered state and separate from the current collector;
(a-2) thermally treating the active material layer in powder form in air for thermal decomposition of a binder and a conductive material in the active material layer, to collect an active material;
(b) washing the collected active material with a lithium compound solution which is basic in an aqueous solution and drying; and
(c) annealing the washed active material with an addition of a lithium precursor to obtain a reusable active material.

2. The method for reusing a positive electrode active material according to claim 1, further comprising:
(d) surface-coating the annealed active material.

3. The method for reusing a positive electrode active material according to claim 1, wherein the dry-milling uses any one of a pin mill, a disc mill, a cutting mill and a hammer mill.

4. The method for reusing a positive electrode active material according to claim 1, further comprising:
shredding or cutting the positive electrode scrap before the dry-milling.

5. The method for reusing a positive electrode active material according to claim 1, wherein the thermal treatment is performed at 300 to 1000°C.

6. The method for reusing a positive electrode active material according to claim 1, wherein the lithium compound solution contains a lithium precursor in an amount of more than 0% and 15% or less, and the washing is performed within 1 hour.

7. The method for reusing a positive electrode active material according to claim 1, wherein the washing is performed by stirring the collected active material at the same time with immersing in the lithium compound solution.

8. The method for reusing a positive electrode active material according to claim 1, wherein the lithium precursor is at least one of LiOH, Li₂CO₃, LiNO₃ or Li₂O.

9. The method for reusing a positive electrode active material according to claim 1, wherein the lithium precursor is added in an amount for adding lithium at a ratio of lost lithium to a ratio between lithium and other metal in a raw active material used in the active material layer.

10. The method for reusing a positive electrode active material according to claim 9, wherein the lithium precursor is added in an amount for adding lithium at a molar ratio of 0.001 to 0.4.

11. The method for reusing a positive electrode active material according to claim 9, wherein the lithium precursor is added in an amount for adding more lithium at a molar ratio of 0.0001 to 0.1 based on a 1 : 1 molar ratio of lithium : other metal.

12. The method for reusing a positive electrode active material according to claim 1, wherein the annealing is performed in air at 400 to 1000°C.

13. The method for reusing a positive electrode active material according to claim 1, wherein a temperature of the annealing step exceeds a melting point of the lithium precursor.

14. The method for reusing a positive electrode active material according to claim 2, wherein the surface-coating step includes coating at least one of a metal, an organic metal or a carbon material on the surface by a solid or liquid phase process, and thermally treating at 100 to 1200°C.

15. The method for reusing a positive electrode active material according to claim 1, wherein the reusable active material is represented by the following Formula 1:
[Formula 1] LiₐNiₓMn_{y}Co_{z}M_{w}O_{2+δ}
where M comprises at least one selected from the group consisting of B, W, Al, Ti and Mg, 1<a≤1.1, 0≤x<0.95, 0≤y<0.8, 0≤z<1.0, 0≤w≤0.1, -0.02≤δ≤0.02, x+y+z+w=1.
